# EUROPÄISCHE PATENTANMELDUNG

(11) **EP 1 387 503 A1**
(43) Veröffentlichungstag der Anmeldung: **04.02.2004**
(21) Anmeldenummer: 02017149.2
(22) Anmeldetag: 30.07.2002
(51) Int. Cl.: H04B 7/26, H04Q 7/36

(54) **Verfahren zur Zuweisung einer Übertragungsrichtung für Zeitschlitze von Zeitrahmen eines Funksystems mit zeitlicher Trennung der Übertragung in Aufwärts- und Abwärtsrichtung, und entsprechendes Funksystem**

(71) Anmelder: SIEMENS AKTIENGESELLSCHAFT, 80333 München (DE)
(72) Erfinder: Haas, Harald, Dr., 83607 Holzkirchen (DE); Wegmann, Bernhard, 83607 Holzkirchen (DE)

(57) **Zusammenfassung**

Die Erfindung betrifft ein Verfahren zur Zuweisung einer Übertragungsrichtung für Zeitschlitze (ts1, ts2, ts3, ts4) von Zeitrahmen (fr1, fr2) eines Funksystems mit zeitlicher Trennung der Übertragung in Aufwärts- (UL) und Abwärtsrichtung (DL). Die Erfindung betrifft ferner ein Funksystem mit zeitlicher Trennung der Übertragung in Aufwärts- (UL) und Abwärtsrichtung (DL) mit mindestens einer Einrichtung zur Zuweisung einer Übertragungsrichtung (UL, DL) für Zeitschlitze (ts1, ..., ts4) von Zeitrahmen (fr1, fr2). Das Verfahren ermöglicht es, die Interferenzbedingungen eines Funksystems mit zeitlicher Trennung der Übertragung in Aufwärts- (UL) und Abwärtsrichtung (DL) von einem ersten Zeitrahmen (fr1) zu einem zweiten Zeitrahmen (fr2) zu verändern. Durch wiederholte und/oder zufällige Zuweisung von Übertragungsrichtungen Aufwärts- (UL) und Abwärtsrichtung (DL) zu Zeitschlitzen (ts1, ..., ts4) von Zeitrahmen (fr1, fr2) werden die Interferenzbedingungen so verändert, daß eine zeitliche Verteilung der Interferenzen über die Zeitschlitze (ts1, ..., ts4) erfolgt. Aufwendige Verfahren zur dynamischen Kanalzuweisung für einzelne Verbindungen sind daher entbehrlich.

## Beschreibung

Die Erfindung betrifft ein Verfahren zur Zuweisung einer Übertragungsrichtung für Zeitschlitze von Zeitrahmen eines Funksystems mit zeitlicher Trennung der Übertragung in Aufwärts- und Abwärtsrichtung. Die Erfindung betrifft ferner ein Funksystem mit zeitlicher Trennung der Übertragung in Aufwärts- und Abwärtsrichtung mit mindestens einer Einrichtung zur Zuweisung einer Übertragungsrichtung für Zeitschlitze von Zeitrahmen, sowie einen entsprechenden Fünkzugangskontroller und ein entsprechendes Kernnetzwerk.

In Funksystemen werden sowohl Signalisierungsdaten bzw. Organisationsinformationen (beispielsweise Steuersignale oder Informationen über die Qualität der Verbindung) als auch Nutzdaten (beispielsweise Sprache, Bildinformationen oder andere Daten) mittels elektromagnetischer Wellen über eine Funkschnittstelle zwischen sendender und empfangender Station übertragen. Eine Trennung der Übertragung in Aufwärtsrichtung (Uplink - UL), d.h. von einer Teilnehmerstation zu einer Basisstation, von der Übertragung in Abwärtsrichtung (Downlink - DL), d.h. von der Basisstation zu einer Teilnehmerstation, kann entweder durch die Wahl verschiedener Zeitschlitze, d.h. über Time Division Duplex (TDD), oder über die Wahl verschiedener Frequenzbänder, d.h. Frequency Devision Duplex (FDD) erfolgen.

Ein Funksystem mit zeitlicher Trennung der Übertragung in Aufwärts- und Abwärtsrichtung (TDD-Funksystem) wie UTRA-TDD (Universal Terrestrial Radio Access - Time Division Duplex) oder TD-SCDMA (Time Division - Synchronous Code Division Multiple Access) eignet sich dabei besonders gut, um eine asymmetrische Übertragung zu ermöglichen.

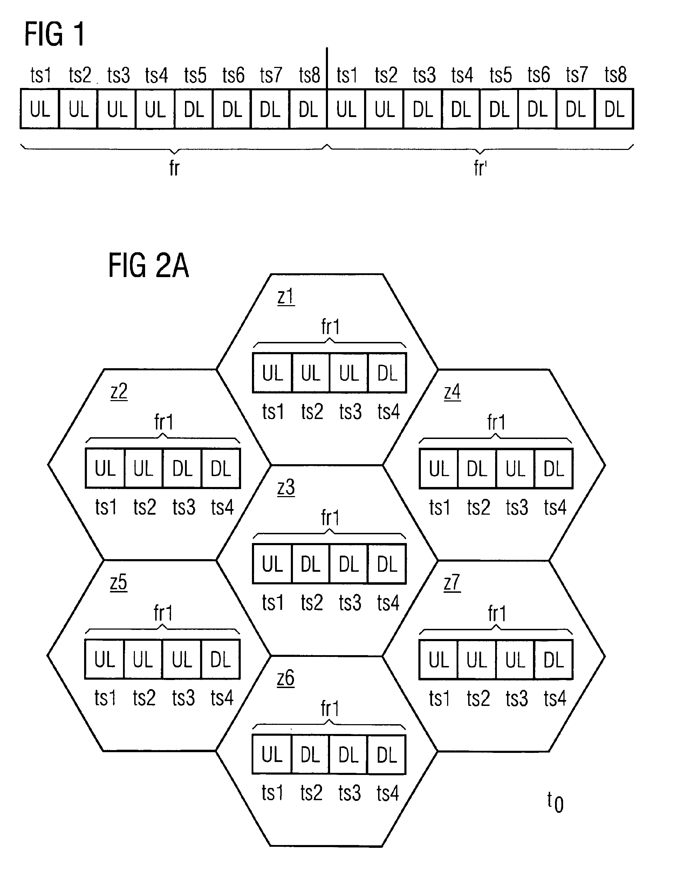

In Figur 1 ist die zeitliche Struktur der Übertragung in einem Funksystem mit zeitlicher Trennung der Übertragung in Aufwärts- und Abwärtsrichtung schematisch dargestellt. Innerhalb eines Zeitrahmens fr, fr' wird einzelnen Zeitschlitzen ts1, ts2, ts3, ts4, ts5, ts6, ts7, ts8 jeweils eine Übertragung in Aufwärts- UL oder Abwärtsrichtung DL zugewiesen. Je nach Anforderungen der Datenübertragung, wird die Anzahl der Zeitschlitze ts1, ..., ts8 in Aufwärtsrichtung UL bzw. Abwärtsrichtung DL festgelegt, so daß beispielsweise zum Betrachten eines Videos eine größere Anzahl der Zeitschlitze ts1, ..., ts8 in Abwärtsrichtung DL als in Aufwärtsrichtung UL betrieben werden. Die Belegung der Zeitschlitze ts1 ..., ts8 in Aufwärts- UL oder Abwärtsrichtung DL kann sich dabei von einem zum nächsten Zeitrahmen fr, fr' ändern. Zwei aufeinanderfolgende Zeitrahmen fr, fr' mit verschiedener Asymmetrie zwischen Aufwärts- UL und Abwärtsrichtung DL sind in Figur 1 dargestellt. Das Verhältnis von Aufwärts- UL zu Abwärtsrichtung DL ist 1:1 im ersten Zeitrahmen fr und 1:3 im zweiten Zeitrahmen fr'.

Die Datenübertragung in Funkzellen eines Funksystems wird durch Interferenzen mit benachbarten Funkzellen gestört. In einem Funksystem mit einer Trennung von Aufwärts- und Abwärtsrichtung in Frequenzbändern (FDD-Funksystem) kann es zum selben Zeitpunkt sowohl zu Interferenzen einer Basisstation einer Funkzelle mit Teilnehmerstationen benachbarter Funkzellen als auch zu Interferenzen einer Teilnehmerstation einer Funkzelle mit den Basisstationen benachbarter Funkzellen kommen. In einem FDD-Funksystem treten die zuvor genannten Interferenzen auf, wenn in benachbarten Funkzellen gleichzeitig gesendet oder empfangen wird. Diese Interferenzen ergeben sich auch in Funksystemen mit zeitlicher Trennung der Übertragung in Aufwärts- und Abwärtsrichtung (TDD-Funksysteme), wenn in benachbarten Funkzellen in gleichen Zeitschlitzen die gleiche Übertragungsrichtung verwendet wird. In einem Funksystem mit zeitlicher Trennung der Übertragung in Aufwärtsund Abwärtsrichtung treten außerdem zusätzliche Interferenzen auf. Die zusätzlichen Interferenzen von Funksystemen mit zeitlicher Trennung der Übertragung in Aufwärts- und Abwärtsrichtung ergeben sich dann, wenn in benachbarten Funkzellen im gleichen Zeitschlitz verschiedene Übertragungsrichtungen Aufwärts- und Abwärtsrichtung verwendet werden. Es entstehen dann Interferenzen der Teilnehmerstationen benachbarter Funkzellen miteinander ebenso wie Interferenzen der Basisstationen benachbarter Funkzellen miteinander.

Um die Interferenzen für alle Verbindungen möglichst günstig zu gestalten, werden Verfahren zur dynamischen Kanalzuweisung (Dynamic Channel Assignment - DCA) angewandt. Zur dynamischen Kanalzuweisung werden Messungen der Übertragungskanäle durchgeführt. Die Auswertung der Messungen und die Kanalzuweisung wird idealer Weise auf einer höheren Schicht (Layer) wie beispielsweise dem Radio Network Controller (RNC) im UTRAN (Universal Terrestrial Radio Access Network) durchgeführt. Dort liegen nicht nur Informationen über Interferenzen in einer einzelnen Funkzelle sondern über Interferenzen mehrerer Funkzellen vor. Durch die Kanalzuweisung in einer höheren Schicht kommt es jedoch auch zu Verzögerungszeiten durch die Signalübertragung sowie zu einer Überlast an Signalisierungsdaten, so daß auf Änderungen der Interferenzen - hervorgerufen z.B. durch die Beweglichkeit der Teilnehmerstationen - nur mit reduzierter Flexibilität reagiert werden kann.

Aus der DE 198 08 948 C2 ist ein Verfahren bekannt, das einzelnen Verbindungen wechselnde Zeitschlitze zuordnet. In dem im genannten Patent beschriebenen Funk-Kommunikationssystem werden in einem festen Zeitschlitz Organisationsinformationen von Funkzellen übertragen. Damit alle Teilnehmer Gelegenheit haben, die Organisationsinformationen benachbarter Funkzellen abzuhören, muß sichergestellt werden, daß ein Teilnehmer nicht ausschließlich in dem der eigenen Funkzelle zugeordneten Zeitschlitz mit Organisationsinformationen empfängt. Dazu dient das Verfahren des Patents, das immer wieder andere Teilnehmer in dem Zeitschlitz mit Organisationsinformationen empfangen läßt, so daß alle Teilnehmer die Möglichkeit haben die Organisationsinformationen der benachbarten Funkzellen zu empfangen.

Der Erfindung liegt daher die Aufgabe zugrunde, ein Verfahren anzugeben, mit dem die in einem Funksystem mit zeitlicher Trennung der Übertragung in Aufwärts- und Abwärtsrichtung auftretenden Interferenzen in günstiger Weise beeinflusst werden können.

Diese Aufgabe wird mit dem Verfahren mit den Merkmalen gemäß Anspruch 1 und dem Funksystem mit den Merkmalen gemäß Anspruch 9 gelöst.

Vorteilhafte Aus- und Weiterbildungen der Erfindung sind Gegenstand der abhängigen Ansprüche.

Beim erfindungsgemäßen Verfahren zur Zuweisung einer Übertragungsrichtung für Zeitschlitze von Zeitrahmen eines Funksystems mit zeitlicher Trennung der Übertragung in Aufwärts- und Abwärtsrichtung, wird Zeitschlitzen in einem ersten Zeitrahmen jeweils eine Übertragungsrichtung zugewiesen. Den Zeitschlitzen wird in einem zweiten Zeitrahmen, der zeitlich direkt auf den ersten Zeitrahmen folgt, jeweils erneut eine Übertragungsrichtung zugewiesen. Dabei ist die Anzahl von Zeitschlitzen in Aufwärtsrichtung und die Anzahl von Zeitschlitzen in Abwärtsrichtung in dem ersten Zeitrahmen gleich der jeweiligen Anzahl im zweiten Zeitrahmen. Für mindestens einen Zeitschlitz pro Übertragungsrichtung wird die Übertragungsrichtung im zweiten Zeitrahmen gegenüber dem ersten Zeitrahmen geändert.

Durch den zuvor beschriebenen Wechsel der Übertragungsrichtung werden die Interferenzbedingungen der durch den Wechsel der Übertragungsrichtung betroffenen Zeitschlitze geändert. In benachbarten Funksysteme mit zeitlicher Trennung der Übertragung in Aufwärts- und Abwärtsrichtung sowie innerhalb eines Funksystems mit zeitlicher Trennung der Übertragung in Aufwärts- und Abwärtsrichtung können so aus Interferenzen von Basisstationen miteinander und Interferenzen von Teilnehmerstationen miteinander beispielsweise Interferenzen von Basisstationen mit Teilnehmerstationen werden oder umgekehrt. Der Wechsel der Übertragungsrichtung kann also zu günstigeren Interferenzbedingungen für die vom Wechsel der Übertragungsrichtung betroffenen Zeitschlitze führen.

Im folgenden werden Mobilstationen beispielhaft als Teilnehmerstationen betrachtet, ohne daß die Erfindung hierauf beschränkt sein soll.

Insbesondere ist es von Vorteil, wenn eine Zuweisung der Übertragungsrichtung der Zeitschlitze nach einer Zuweisungsvorschrift erfolgt. Die Zuweisungsvorschrift kann an spezielle Gegebenheiten des Funksystems mit zeitlicher Trennung der Übertragung in Aufwärts- und Abwärtsrichtung angepaßt werden und so für eine möglichst große Anzahl der Zeitschlitze eines Zeitrahmens bessere Interferenzbedingungen bewirken. Die Zuweisungsvorschrift kann dabei so erfolgen, daß Zeitschlitze mit sehr hohen Interferenzen mit Zeitschlitzen mit sehr geringen Interferenzen vertauscht werden.

Innerhalb eines Funksystems mit zeitlicher Trennung der Übertragung in Aufwärts- und Abwärtsrichtung, das über mehrere Funkzellen verfügt, ist es von Nutzen, wenn in wenigstens zwei benachbarten Funkzellen verschiedene Zuweisungsvorschriften verwendet werden. Auf diese Weise kann sichergestellt werden, daß in den Funkzellen ein Wechsel der Übertragungsrichtung für die betroffenen Zeitschlitze zu veränderten Interferenzbedingungen führt. Innerhalb des Funksystems mit zeitlicher Trennung der Übertragung in Aufwärts- und Abwärtsrichtung werden so Interferenzen besser über alle Zeitschlitze verteilt oder auch gemittelt.

Stehen mehrere Zuweisungsvorschriften zur Verfügung, so wird nach einer weiteren Ausführungsform der Erfindung die Zuweisungsvorschrift zufällig ermittelt. Auf diese Weise erfolgt eine Änderung der Interferenzbedingungen bei geringerem Signaiisierungsbedarf, da eine Auswahlverfahren für die beste Zuweisungsvorschrift nicht benötigt wird.

Vorteilhafter Weise erfolgt die Zuweisung der Übertragungsrichtung der Zeitschlitze für weitere Zeitrahmen zeitlich wiederholt. Die zeitliche Wiederholung ermöglicht es von dem zuvor genannten Vorteil der Verbesserung der Interferenzbedingungen für möglichst viele der Zeitschlitze eines Zeitrahmens bzw. wiederholt profitieren zu können, so daß in dem Funksystem mit zeitlicher Trennung der Übertragung in Aufwärts- und Abwärtsrichtung die Interferenzen über alle Zeitschlitze verteilt oder gemittelt werden.

Insbesondere ist es günstig, wenn die Zuweisung der Übertragungsrichtung der Zeitschlitze für mindestens einen, dem zweiten Zeitrahmen zeitlich direkt folgenden, dritten Zeitrahmen, mit der Zuweisung der Übertragungsrichtung der Zeitschlitze des zweiten Zeitrahmens übereinstimmt.

In dem Funksystem mit zeitlicher Trennung der Übertragung in Aufwärts- und Abwärtsrichtung können sich die Bedingungen, die zu Interferenzen führen, d.h. die Anzahl der Mobilstationen in einer Funkzelle sowie die Belegung der Zeitschlitze durch die Mobilstationen ständig ändern. Es ist daher günstig, wenn statt einer festen Zuweisungsvorschrift eine zeitlich sich ändernde Zuweisungsvorschrift verwendet wird, die flexibel an die momentanen Interferenzbedingungen angepaßt werden kann.

Weist die Zuweisungsvorschrift die Übertragungsrichtung nach einem Zufallsprinzip zu, so ergibt sich ein Vorteil daraus, daß sich alle Interferenzen zwischen Mobilstationen und zwischen Basisstationen automatisch über die Zeit mitteln. Auf diese Weise lassen sich in beliebigen Funksystemen mit zeitlicher Trennung der Übertragung in Aufwärts- und Abwärtsrichtung alle zeitlichen Veränderungen der Interferenzbedingungen berücksichtigen und eine Mittelung der Interferenzen erreichen, ohne daß spezielle Zuweisungsvorschriften oder gar dynamische Mechanismen zur Kanalzuweisung von Nöten wären. Im Einzelfall können sogar im Mittel geringere Interferenzen erreicht werden, als dies der Fall wäre, wenn nur die bei einem FDD-Funksystem auftretenden Interferenzmechanismen auftreten würden.

Das Funksystem mit zeitlicher Trennung der Übertragung in Aufwärts- und Abwärtsrichtung, der Funkzugangskontroller und das Kernnetzwerk sind mit den für die Durchführung des Verfahrens notwendigen Komponenten ausgestattet.

Die Erfindung und Einzelheiten sollen im folgenden anhand von in den Figuren dargestellten Ausführungsbeispielen näher erläutert. Es zeigen:
- Fig. 1:: ein Schema einer bekannten Struktur von zwei Zeitrahmen mit Zeitschlitzen eines Funksystems mit zeitlicher Trennung der Übertragung in Aufwärts- und Abwärtsrichtung,
- Fig. 2 mit Teilfigur 2a:: ein Schema eines Ausschnitt eines erfindungsgemäßen zellularen Mobilfunksystems zu einem Zeitpunkt t₀, und
- Teilfigur 2b:: ein Schema eines Ausschnitts des erfindungsgemäßen zellularen Mobilfunksystems nach Figur 2 zu einem Zeitpunkt t₀+ Δt,
- Fig. 3:: ein Schema eines zeitlichen Ablaufs einer Zuweisung der Übertragungsrichtung für Zeitrahmen einer Funkzelle mit einer Mobilstation,
- Fig. 4:: Schema eines erfindungsgemäßen Mobilfunksystems nach dem UMTS-Standard (UMTS: Universal Mobile Telecommunications System).

Bereits in der Beschreibungseinleitung wurde das in Figur 1 dargestellte Schema einer Rahmenstruktur mit Zeitschlitzen eines Funksystems mit zeitlicher Trennung der Übertragung in Aufwärts- und Abwärtsrichtung beschrieben.

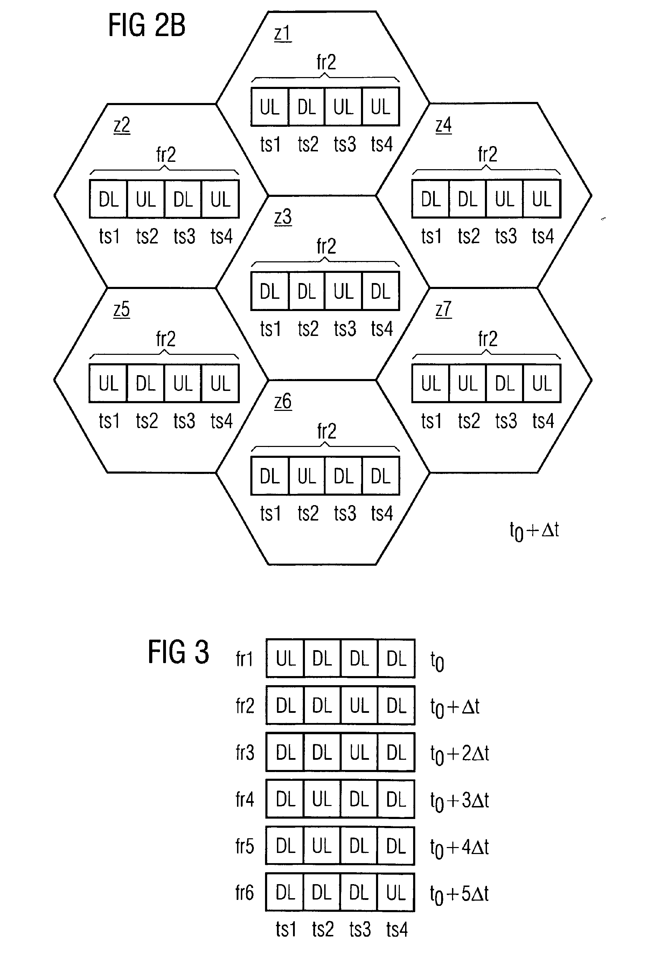

In den Figuren 2 und 3 wird der Übersichtlichkeit halber ein Funksystem mit zeitlicher Trennung der Übertragung in Aufwärts- und Abwärtsrichtung, im folgenden kurz TDD-Funksystem genannt, mit vier Zeitschlitzen pro Zeitrahmen und einem Teilnehmer je Funkzelle beschrieben. Die Zeitrahmen der Funkzellen sind zeitlich synchronisiert. Die Ausführungen stehen sinngemäß jedoch für alle Funksysteme die im TDD-Modus übertragen, insbesondere für UTRA-TDD und TD-SCDMA. Selbstverständlich läßt sich das Verfahren ebenfalls verwenden, wenn in jeder Funkzelle mehrere Benutzer auf die zur Verfügung stehenden Zeitschlitze verteilt sind und wenn die Zeitrahmen nicht synchronisiert sind.

Auch in weiteren Funksystemen wie Ad-hoc-Netzen (auch selbstorganisierende Netze genannt) ist die Erfindung ohne weiteres anwendbar und kann zu den oben beschriebenen Vorteilen führen.

Figur 2 setzt sich zusammen aus den Teilfiguren 2a (oben) und 2b (unten), wobei in beiden Teilfiguren größtenteils identische Bezugszeichen verwendet werden.

In dem in Teilfigur 2a dargestellten erfindungsgemäßen Schema eines TDD-Funksystems wird in sieben Funkzellen z1 z2, z3, z4, z5, z6, z7 in Zeitrahmen fr1 übertragen, die je vier Zeitschlitze ts1, ts2, ts3, ts4 enthalten. Den Zeitschlitzen ts1, ts2, ts3, ts4 ist jeweils eine Übertragungsrichtung Aufwärts- UL oder Abwärtsrichtung DL zugeordnet. Jede Funkzelle z1 ..., z7 besitzt je eine Basisstation und eine Mobilstation, wobei die Erfindung auch dann angewendet werden kann, wenn Funkzellen z1, ..., z7 keine eigene Basisstation besitzen und/oder mehrere Mobilstationen in einer Funkzelle z1, ..., z7 übertragen.

In den einzelnen Funkzellen z1 ..., z7 liegen zum Zeitpunkt t₀ verschiedene Asymmetrien vor, d.h. es werden unterschiedliche Anzahlen von Zeitschlitzen ts1, ts2, ts3, ts4 in Aufwärts- UL oder Abwärtsrichtung DL verwendet. In Funkzelle z1 sind beispielsweise drei Zeitschlitze ts1, ts2, ts3 in Aufwärtsrichtung UL und ein Zeitschlitz ts4 in Abwärtsrichtung DL verwendet, während sich in Funkzelle z3 der umgekehrte Fall darstellt. Für die Funkzellen z1 und z3 gibt es daher Interferenzen zwischen den jeweiligen Basisstationen und zwischen den jeweiligen Mobilstationen für die Zeitschlitze ts2 und ts3. In den Zeitschlitzen ts1 und ts4 treten hingegen nur Interferenzen der Basisstationen mit den Mobilstationen auf.

In Teilfigur 2b ist im Schema aus Teilfigur 2a die Belegung der Zeitschlitze ts1, ts2, ts3, ts4 zu einem späteren Zeitpunkt t₀ + Δt in einem Zeitrahmen fr2 dargestellt, der dem ersten Zeitrahmen fr1 zeitlich direkt folgt. Der genaue Wert von Δt ergibt sich für jedes Funksystem gemäß den dort geltenden Vorgaben. Am Beispiel von Funkzelle z1 und z3 ist zu erkennen, daß bei gleicher Asymmetrie wie zum Zeitpunkt t₀, d.h. unveränderter Anzahl von Zeitschlitzen in Aufwärtsrichtung UL und unveränderter Anzahl von Zeitschlitzen in Abwärtsrichtung DL, nun in den Zeitschlitzen ts1 und ts4 Interferenzen zwischen den jeweiligen Basisstationen und zwischen den jeweiligen Mobilstationen auftreten. Für die Zeitschlitze ts2 und ts3 treten jetzt nur Interferenzen der Basisstationen mit den Mobilstationen auf. Ähnliche Ergebnisse finden sich bei Betrachtung der anderen Funkzellen z2, z4, z5, z6, z7 im Vergleich mit ihren jeweiligen Nachbarfunkzellen. Zu weiteren nachfolgenden Zeitpunkten werden die Übertragungsrichtungen für die Zeitschlitze ts1, ts2, ts34, ts4 einer Funkzelle z1, ..., z7 gegenüber einem vorhergehenden Zeitpunkt erneut geändert. Durch diesen ständigen Wechsel der einem Zeitschlitz ts1, ts2, ts3, ts4 einer Funkzelle z1 ..., z7 zugeordneten Übertragungsrichtung, treten zu verschiedenen Zeitpunkten unterschiedliche Interferenzbedingungen auf, so daß eine zeitliche Mittelung der Interferenzen in den Zeitschlitzen ts1, ts2, ts3, ts4 einer Funkzelle z1 ..., z7 erfolgt. Dies kann durch den Wechsel der Art der Interferenz in einem Zeitschlitz ts1, ts2, ts3, ts4 sogar dazu führen, daß geringere Interferenzen erreicht werden, als dies in einem FDD-Funksystem der Fall wäre.

Eine Zuweisung der Übertragungsrichtung der einzelnen Zeitschlitze ts1, ts2, ts3, ts4 wird für jede Funkzelle nach einer Zuweisungsvorschrift ZV geregelt, die aus einer Liste von Zuweisungsvorschriften zufällig ermittelt wird. Die jeweilige Zuweisungsvorschrift ZV, d.h. die für einen direkt nachfolgenden Zeitrahmen fr1, fr2 vorgesehene Zuweisung, wird Mobilstationen der Funkzellen z1 ..., z7 über einen nicht dargestellten Organisationskanal mitgeteilt, der einen Zeitschlitz ts1, ts2, ts3, ts4 eines Zeitrahmens fr1, fr2 belegt und dadurch für diesen Zeitschlitz ts1, ts2, ts3, ts4 bereits eine Übertragungsrichtung Abwärtsrichtung DL festlegt. Die Zuweisungsvorschrift ZV erstreckt sich somit über alle verbleibenden Zeitschlitze ts1, ts2, ts3, ts4 eines Zeitrahmens fr1, fr2.

Besonders gut läßt sich die Interferenz über die einzelnen Zeitschlitze ts1, ts2, ts3, ts4 im zeitlichen Mittel verteilen, in dem nicht nur wiederholt eine erneute Zuweisung von Aufwärts- UL und Abwärtsrichtung DL zu den einzelnen Zeitschlitzen ts1, ts2, ts3, ts4 erfolgt sondern auch die Zuweisungsvorschrift ZV immer wieder geändert wird. Insbesondere, wenn die Vergabe eines Zeitschlitzes ts1, ts2, ts3, ts4 zu Aufwärts- UL oder Abwärtsrichtung DL rein zufällig erfolgt, ergibt sich eine gute Mittelung der Interferenzen für alle Zeitschlitze ts1, ts2, ts3, ts4 aller Funkzellen. Eine gezielte Wahl einer Zuweisungsvorschrift ZV kann so ebenso entfallen wie die Verwendung aufwendiger Verfahren zur dynamischen Kanalzuweisung.

In Figur 3 ist in einem Schema die zeitliche Änderung der Übertragungsrichtung der Zeitschlitze ts1, ts2, ts3, ts4 in Zeitrahmen fr1, fr2, fr3, fr4, fr5, fr6 einer Funkzelle z1, ..., z7 dargestellt. Alle Zeitschlitze ts1, ts2, ts3, ts4 werden von einem einzigen Teilnehmer belegt und die Asymmetrie ist fest vorgegeben. In den Zeitpunkten t₀ bis t₀ + 5Δt sind alle möglichen Anordnungen der Zeitschlitze ts1, ts2, ts3, ts4 dargestellt. Ist k die Anzahl aller Zeitschlitze und n die Anzahl der Zeitschlitze in Aufwärts- UL bzw. Abwärtsrichtung DL, so ist die Zahl aller möglichen Anordnungen gegeben durch den mathematischen Ausdruck 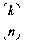 . Diese möglichen

Anordnungen werden zufällig ausgewählt, um so eine gute Mittelung der Interferenzen zu erreichen. Der zweite und dritte Zeitrahmen fr2, fr3 sowie der vierte und der fünfte Zeitrahmen fr4, fr5 haben gleiche Belegungen der Zeitschlitze ts1, ts2, ts3, ts4 für Aufwärts- UL und Abwärtsrichtung DL. In weiteren, nicht dargestellten Ausführungen der Erfindung ist es allerdings auch möglich, die Belegung der Zeitschlitze ts1, ts2, ts3, ts4 entweder für beliebig viele Zeitrahmen fr1, ..., fr6 unverändert zu lassen oder sogar in jedem Zeitrahmen fr1, ..., fr6 zu ändern.

In einer nicht dargestellten weiteren Ausführung der Erfindung werden die Zeitschlitze ts1, ts2, ts3, ts4 von verschiedenen Teilnehmern belegt und/oder mehrere verschiedene Teilnehmer sind mindestens einem der Zeitschlitze ts1, ts2, ts3, ts4 gleichzeitig zugeordnet (beispielsweise mittels Code Division Multiple Access - CDMA). In diesem Fall können sich die Interferenzbedingungen für die Teilnehmer auch dadurch ändern, daß auch für Zeitschlitze ts1, ts2, ts3, ts4 eines Zeitrahmens fr1 ..., fr6 mit gleicher Übertragungsrichtung Aufwärts- UL oder Abwärtsrichtung DL (aber möglicherweise unterschiedlichen Teilnehmern) die zeitliche Position in folgenden Zeitrahmen fr1, ..., fr6 geändert wird. Bezogen auf den ersten Zeitrahmen fr1 von Figur 3 entspräche diese Ausführung der Erfindung beispielsweise einer Vertauschung des dritten Zeitschlitzes ts3 mit dem vierten Zeitschlitz ts4 bei gleichzeitiger Beibehaltung der Belegung der ersten beiden Zeitschlitze ts1, ts2. Da alle Zeitschlitze ts1, ts2, ts3, ts4 unterscheidbar sind und angeordnet werden können, gibt es, mit k der Anzahl der Zeitschlitze, k² Möglichkeiten bei fester Asymmetrie die Zeitschlitze zu Aufwärts- UL und Abwärtsrichtung DL zuzuweisen.

Keiner eingehenden Erklärung bedarf, daß auch eine sich von einem Zeitrahmen zum nächsten Zeitrahmen ändernde Asymmetrie nicht die Funktionsweise und den Erfolg des Verfahrens beeinträchtigt.

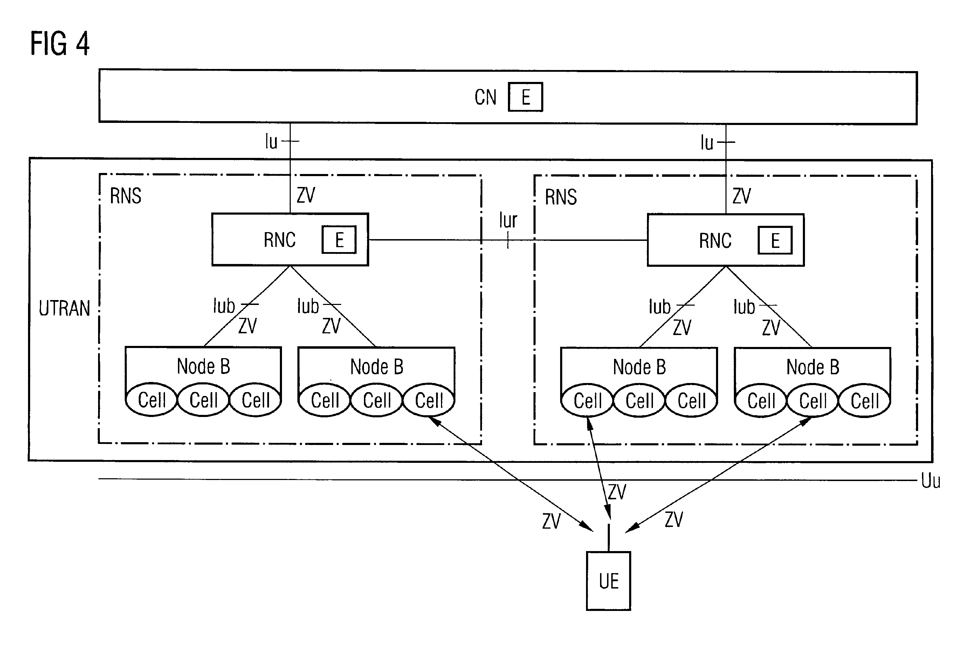

In Figur 4 ist ein Schema eines erfindungsgemäßen Mobilfunksystems nach dem UMTS-Standard dargestellt. Ein Kernnetzwerk CN ist über Schnittstellen Iu mit dem UTRAN (Universal Terrestrial Radio Access Network) verbunden. Das UTRAN besteht aus mehreren Subsystemen RNS (Radio Network Subsystem), die jeweils eine Datenleitung Iu zum Kernnetzwerk CN haben. Angeschlossen an jede Schnittstelle Iu ist immer ein Funknetzkontroller RNC (Radio Network Controller), der wiederum über Schnittstellen Iub mit mehreren Basisstationen Node B verbunden ist. Jeder Basisstation Node B können (z. B. über Sektorantennen) mehrere Funkzellen Cell des Funksystems zugeordnet sein. Die Schnittstelle zwischen UTRAN und einem Teilnehmergerät UE (User Equipment), beispielsweise einer Mobilstation, erfolgt über die Luftschnittstelle Uu mittels einer Funkverbindung. Die Funknetzkontroller RNC verschiedener Subsysteme RNS sind untereinander in der Regel über eine Iur genannte Schnittstelle verbunden. In den Funknetzkontrollern RNC und/oder im Kernnetzwerk CN befinden sich Einrichtungen E, die den Zeitschlitzen eines Zeitrahmens Übertragungsrichtungen Aufwärts- UL und Abwärtsrichtung DL zuweisen.

Auch die Zuweisungsvorschrift ZV für die Übertragungsrichtung kann in der Einrichtung E gespeichert sein oder ermittelt werden. Übermittelt wird die Zuweisungsvorschrift vom Kernnetzwerk CN an einen Funknetzkontroller RNC in einem Organisationskanal über eine Schnittstelle Iu. Vom Funknetzkontrol-1er RNC wird die Zuweisungsvorschrift ZV ebenfalls in einem Organisationskanal über die Schnittstellen Iub an die Basisstationen Node B übertragen und von dort über einen Organisationskanal der Luftschnittstelle Uu dem Teilnehmergerät UE mitgeteilt.

## Patentansprüche

1. Verfahren zur Zuweisung einer Übertragungsrichtung für Zeitschlitze (ts1, ts2, ts3, ts4) von Zeitrahmen (fr1, fr2) eines Funksystems mit zeitlicher Trennung der Übertragung in Aufwärts- (UL) und Abwärtsrichtung (DL), bei dem
- Zeitschlitzen (ts1, ts2, ts3, ts4) in einem ersten Zeitrahmen (fr1) jeweils eine Übertragungsrichtung (UL, DL) zugewiesen wird,
- den Zeitschlitzen (ts1, ts2, ts3, ts4) in einem zweiten Zeitrahmen (fr2), der zeitlich direkt auf den ersten Zeitrahmen (fr1) folgt, jeweils eine Übertragungsrichtung (UL, DL) zugewiesen wird,
- die Anzahl von Zeitschlitzen (ts1, ts2, ts3, ts4) in Aufwärtsrichtung (UL) und die Anzahl von Zeitschlitzen (ts1, ts2, ts3, ts4) in Abwärtsrichtung (DL) in dem ersten Zeitrahmen (fr1) gleich der jeweiligen Anzahl im zweiten Zeitrahmen (fr2) ist,
- die Übertragungsrichtung im zweiten Zeitrahmen (fr2) für mindestens einen Zeitschlitz (ts1, ts2, ts3, ts4) pro Übertragungsrichtung gegenüber dem ersten Zeitrahmen (fr1) geändert wird.

2. Verfahren nach Anspruch 1, bei dem eine Zuweisung der Übertragungsrichtung der Zeitschlitze (ts1, ts2, ts3, ts4) nach einer Zuweisungsvorschrift (ZV) erfolgt.

3. Verfahren nach Anspruch 2, bei dem
- das Funksystem mehrere Funkzellen (z1, ..., z7) aufweist
- und in wenigstens zwei benachbarten Funkzellen (z1, ..., z7) verschiedene Zuweisungsvorschriften (ZV) verwendet werden.

4. Verfahren nach Anspruch 2 oder 3, bei dem die Zuweisungsvorschrift (ZV) zufällig ermittelt wird.

5. Verfahren nach einem der Ansprüche 2 bis 4, bei dem die Zuweisung der Übertragungsrichtung der Zeitschlitze (ts1, ts2, ts3, ts4) für weitere Zeitrahmen (fr2, ..., fr6) zeitlich wiederholt erfolgt.

6. Verfahren nach Anspruch 5, bei dem die Zuweisung der Übertragungsrichtung der Zeitschlitze (ts1, ts2, ts3, ts4) für mindestens einen, dem zweiten Zeitrahmen (fr2, fr4), zeitlich direkt folgenden, dritten Zeitrahmen (fr3, fr5), mit der Zuweisung der Übertragungsrichtung der Zeitschlitze (ts1, ts2, ts3, ts4) des zweiten Zeitrahmen übereinstimmt.

7. Verfahren nach einem der Ansprüche 2 bis 6, bei dem die Zuweisungsvorschrift (ZV) sich zeitlich ändert.

8. Verfahren nach einem der Ansprüche 2 bis 7, bei dem die Zuweisungsvorschrift (ZV) die Übertragungsrichtung der Zeitschlitze (ts1, ts2, ts3, ts4) nach einem Zufallsprinzip zuweist.

9. Funksystem mit zeitlicher Trennung der Übertragung in Aufwärts- (UL) und Abwärtsrichtung (DL),
- mit mindestens einer Einrichtung (E) zur Zuweisung einer Übertragungsrichtung für Zeitschlitze (ts1, ts2, ts3, ts4) von Zeitrahmen (fr1 ..., fr6),
- bei dem die Einrichtung (E) Zeitschlitzen (ts1, ts2, ts3, ts4) in einem ersten und in einem zweiten Zeitrahmen (fr1, fr2), der zeitlich auf den ersten Zeitrahmen (fr1) folgt, jeweils eine Übertragungsrichtung zuweist, wobei die Anzahl von Zeitschlitzen (ts1, ts2, ts3, ts4) in Aufwärtsrichtung (UL) und die Anzahl von Zeitschlitzen (ts1, ts2, ts3, ts4) in Abwärtsrichtung (DL) in dem ersten Zeitrahmen (fr1) gleich der jeweiligen Anzahl im zweiten Zeitrahmen (fr2) ist,
- bei dem die Einrichtung (E) die Übertragungsrichtung im zweiten Zeitrahmen (fr2) für mindestens einen Zeitschlitz (ts1, ts2, ts3, ts4) pro Übertragungsrichtung gegenüber dem ersten Zeitrahmen (fr1) ändert.

10. Funknetzkontroller (RNC) eines Funksystems nach Anspruch 9, umfassend eine Einrichtung (E) zur Zuweisung einer Übertragungsrichtung für Zeitschlitze (ts1, ts2, ts3, ts4) von Zeitrahmen (fr1, ..., fr6).

11. Kernnetzwerk (CN) eines Funksystems nach Anspruch 9 oder 10, mit einer Einrichtung (E) zur Zuweisung einer Übertragungsrichtung für Zeitschlitze (ts1, ts2, ts3, ts4) von Zeitrahmen (fr1, ..., fr6).
